Europäisches Patentamt

European Patent Office

Office européen des brevets

(11) Numéro de publication: **0 014 622**

**A1**

## (12) DEMANDE DE BREVET EUROPEEN

(21) Numéro de dépôt: 80400104.8

(22) Date de dépôt: 22.01.80

(51) Int. Cl.³: **A 01 C 9/02**

(30) Priorité: 23.01.79 FR 7901691

(43) Date de publication de la demande:
20.08.80 Bulletin 80/17

(84) Etats Contractants Désignés:
**BE DE FR GB IT NL**

(71) Demandeur: **Boullain, Michel**
**19, rue St. Marc**
**F-75002 Paris(FR)**

(72) Inventeur: **Boullain, Michel**
**19, rue St. Marc**
**F-75002 Paris(FR)**

(74) Mandataire: **Harlé, Robert et al,**
**c/o Cabinet Harlé & Lechopiez 21, rue de la**
**Rochefoucauld**
**F-75009 Paris(FR)**

(54) **Machine automatique pour le dépôt d'objets fragiles sur le sol.**

(57) La machine comporte un châssis (1) monté sur des roues (2) et porteur d'un réservoir principal (4), d'une bande transporteuse principale (8), d'un réservoir auxiliaire (16) et d'une bande transporteuse auxiliaire (19) entraînée en rotation par intermittence à l'aide d'un mécanisme de roue libre (40) actionné par un vérin à double effet (42), les moyens de commande dudit vérin étant des distributeurs (43 et 44) reliés à une source de fluide comprimé (S) et contrôlés par des valves (45 et 46) actionnées par des palpeurs (47 et 48).

EP 0 014 622 A1

./...

FIG.3

" Machine automatique pour le dépôt
d'objets fragiles sur le sol "

La présente invention concerne une machine automatique destinée à déposer des objets fragiles sur le sol à intervalles réguliers.

L'invention s'applique plus particulièrement aux planteuses automatiques de pommes de terre équipées d'un dispositif correcteur destiné à compenser les manques.

Avant la plantation, les tubercules notamment de pommes de terre, qui ont germé sont coupés en plusieurs morceaux porteurs chacun d'au moins un germe. Ces germes, qui pendant le stockage se sont développés en pousses d'une certaine longueur sont très fragiles et il faut éviter à tout prix de briser ou d'arracher ces pousses au moment de la plantation car celà risquerait de ralentir ou d'arrêter la croissance de la plante.

Par conséquent, la régularité de la plantation dépend à la fois d'une bonne compensation des manques intervenant dans le fonctionnement de l'appareil planteur et des précautions prises dans la manipulation des tubercules lors de leur dépôt sur le sol.

DA.

On connaît actuellement des planteuses automatiques rudimentaires telles que celle décrite dans le brevet d'invention FR 2.080.033 , cette planteuse ne comportant pas de dispositif correcteur susceptible de compenser les manques. En outre, sur la machine décrite dans ce brevet, le dispositif destiné à déposer les tubercules sur le sol comporte un couloir de descente sensiblement vertical délimité par un carter en tôle contre lequel les tubercules germés frottent le long de toute sa longueur . Avec une telle machine, la régularité de la plantation risque d'être fort compromise dans la mesure où les manques ne sont pas compensés et dans la mesure où le frottement imposé aux germes le long du couloir de descente risque d'endommager sérieusement ceux-ci .

Une planteuse automatique de pomme de terre plus perfectionnée est décrite dans le brevet français 988.160 , ladite machine comportant un dispositif compensateur des manques constitué par une bande sans fin auxiliaire fonctionnant par intermittence pour déverser un tubercule dans un godet resté vide du dispositif principal de transport des pommes de terre sur le sol. L'inconvénient présenté par cette machine consiste en ce que le système de détection des manques commande la mise en route du dispositif correcteur par l'intermédiaire d'un système mécanique compliqué comportant de multiples roues ,cames et doigts d'entraînement solidaires d'un palpeur basculant, la multiplicité des axes de rotation augmentant les risques de blocages dûs notamment à des impuretés et susceptibles d'endommager les germes des tubercules.

On connaît également des planteuses automatiques de pomme de terre perfectionnées telles que décrites dans les brevets français n°2.088.740 et n°28 669/564.990 ,ces machines comportant un dispositif correcteur destiné à compenser les manques, ce qui contribue à améliorer la régularité de la plantation. Toutefois,la commande de ces dispositifs correcteurs s'effectue par l'intermédiaire d'un système mécanique à tringlerie dont les multiples axes de pivotement augmentent les risques de blocage et dont l'inertie induit un effort important sur le tubercule pour déclencher la compensation. En outre,chacune de ces machines comporte un couloir de descente des tubercules jusqu'au sol qui est délimité par un carter en tôle contre lequel les germes peuvent frotter,ce qui les endommage .

Le but de la présente invention est donc de proposer une machine automatique permettant d'obtenir une plantation parfaitement régulière notamment de pommes de terre , sans aucun manque et sans tubercule endommagé , la machine selon l'invention assurant à la fois la compensation des manques et la protection des tubercules transportés jusqu'au sol à l'abri des chocs et des frottements.

Selon l'invention, la machine pour déposer sur le sol des objets fragiles , notamment des tubercules germés, comprend un châssis ,un réservoir d'objets à déposer délivrant ceux-ci par gravité, une bande transporteuse continue principale pourvue de barrières transversales délimitant des compartiments susceptibles de recevoir chacun un seul objet,des moyens d'entraînement de ladite bande transporteuse,un dispositif correcteur comportant une bande transporteuse auxiliaire destinée à délivrer les objets dans les compartiments restés vides de la bande principale et des moyens d'entraînement intermittent de ladite bande auxiliaire, un dispositif de détection des manques dans les compartiments de la bande transporteuse principale, et des moyens de commande du fonctionnement des moyens d'entraînement intermittent de la bande auxiliaire, la bande transporteuse principale comportant un brin de chargement sensiblement vertical défilant devant la sortie du réservoir d'objets et un brin de déchargement descendant au voisinage du sol, tandis que la bande auxiliaire du dispositif correcteur est située à l'aplomb de ladite bande principale de manière à pouvoir déverser les objets de compensation sur celle-ci, caractérisé en ce que les moyens de commande des moyens d'entraînement de la bande auxiliaire sont actionnés par une source d'énergie auxiliaire indépendante des moyens d'entraînement de la bande transporteuse principale, l'activation de ces moyens de commande étant effectuée par le système de détection, et en ce que le brin de déchargement de la bande transporteuse principale est incliné obliquement en direction du sol de telle sorte que, le long dudit brin, les tubercules reposent par gravité dans le fond de leur compartiment.

Pour rendre le fonctionnement de la machine selon l'invention entièrement automatique, un réservoir auxiliaire de stockage des objets destinés à compenser les manques est prévu à la partie supérieure de la machine de manière à déverser lesdits objets face au brin de chargement sensiblement vertical    de la bande transporteuse auxiliaire du dispositif correcteur.

De préférence, la bande transporteuse auxiliaire du dispositif correcteur est du même type que la bande transporteuse principale et elle est équipée d'une série de barrières transversales disposées à intervalles réguliers les unes derrière les autres de manière à former des compartiments sensiblement identiques . De préférence, ces barrières sont formées par des griffes ou des dents de fourche .

Le système de détection est essentiellement constitué par un palpeur formé d'une tige mobile dans un plan perpendiculaire à celui de la bande transporteuse et parallèle au sens d'avancement, cette tige pouvant soit traverser une barrière de la bande par une échancrure de ladite barrière sans être entraînée par celle-ci quand elle ne transporte aucun objet, soit au contraire être entraînée dans le sens du mouvement d'un objet situé dans un compartiment .

De préférence encore, le dispositif comprend les tiges fixes parallèles à la direction longitudinale de la bande, et pouvant traverser les barrière de celle - ci . Lesdites tiges étant réglables en position et placées dans la région où la bande est chargée avec les objets, la position de ces tiges étant réglée pour que la bande accepte normalement un objet et un seul par compartiment. De manière avantageuse, la bande peut comporter dans chaque compartiment une barrière de faible hauteur qui ne dépasse pas suffisamment au-delà des tiges fixes mais limite le déplacement des objets chargés lorsque la bande se retourne en dehors de la région où se trouve ces tiges fixes.

Selon un premier mode de réalisation, les moyens d'entraînement de la bande transporteuse auxiliaire du dispositif correcteur sont essentiellement constitués par un dispositif d'embrayage destiné à relier momentanément ladite bande auxiliaire au moyen d'entraînement de la bande transporteuse principale. Le fonctionnement est alors parfaitement synchronisé quel que soit la vitesse de la bande principale. Par embrayage,il faut entendre aussi bien un dispositif purement mécanique d'entraînement par engrènement ou par frottement que tout autre dispositif assurant le synchronisme par liaison à un moyen commun d'entraînement.

Selon un autre mode de réalisation, les moyens d'entraînement de la bande transporteuse auxiliaire du dispositif correcteur sont essentiellement constitués par un mécanisme de roue libre associé à un organe moteur tel qu'un vérin pneumatique ou hydraulique ou encore un moteur électrique à fonctionnement pas-à-pas .

Selon l'invention,dans le premier mode de réalisation précité,les moyens de commande des moyens d'entraînement de la bande transporteuse auxiliaire sont essentiellement constitués par un vérin pneumatique ou hydraulique qui commande l'accouplement de la bande auxiliaire à la bande transporteuse principale, une électrovanne de commande dudit vérin et un contact électrique qui est actionné par le palpeur du système de détection.

Dans le second mode de réalisation selon l'invention,lorsque le mécanisme de roue libre est entraîné par intermittence par un vérin hydraulique ou pneumatique,les moyens de commande dudit vérin sont essentiellement constitués par deux distributeurs assurant la communication entre ledit vérin d'actionnement et une source de fluide comprimé et par un circuit de contrôle de ces distributeurs relié à ladite source de fluide comprimé et incorporant deux valves de coupure du circuit,le système de détection selon ce second mode de réalisation comportant un premier détecteur servant à détecter le passage d'un compartiment de la bande transporteuse principale et un second détecteur servant à détecter la présence d'un objet dans un compartiment,chaque détecteur actionnant une /valve de coupure du circuit de contrôle des distributeurs .

Dans le second mode de réalisation selon l'invention,lorsque le mécanisme de roue libre est entraîné par un moteur électrique pas-à-pas, ledit moteur est évidemment relié à une source d'énergie électrique qui assure son fonctionnement et les moyens de commande de celui-ci sont essentiellement constitués par deux contacteurs ou interrupteurs qui sont actionnés par deux détecteurs du système de détection , l'un des détecteurs enregistrant la présence ou l'absence d'un objet dans un compartiment de la bande transporteuse principale tandis que le second détecteur enregistre le passage de ces compartiments.

L'invention va maintenant être décrite plus en détails en se référant à des modes de réalisation particuliers cités à titre d'exemples non limitatifs et représentés par les dessins annexés dans lesquels :

Figure 1 est une coupe longitudinale schématique de la machine selon l'invention agencée selon un premier mode de réalisation;

Figure 2 est une vue en perspective de détail de la bande transporteuse principale et du détecteur de présence d'objets dans un compartiment;

Figure 3 est une coupe schématique longitudinale d'une machine équipée selon un second mode de réalisation selon l'invention;

Figures 4, 5, 6 et 7 sont des schémas explicatifs du fonctionnement de la commande du dispositif correcteur.

La machine automatique pour le dépôt d'objets fragiles sur le sol décrite ci-après est une planteuse automatique de pommes de terre.

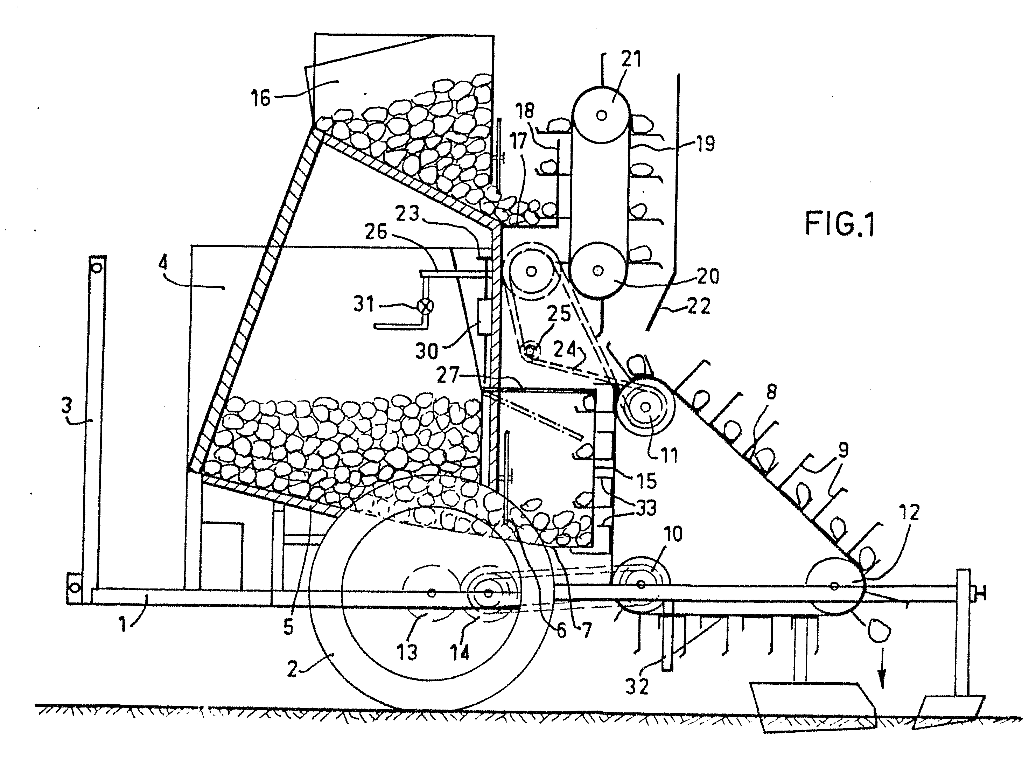

Selon un premier mode de réalisation tel que représenté sur la figure 1, la machine selon l'invention comprend un châssis 1 muni de roues 2 et de moyens d'accrochage 3 à un tracteur non représenté. Un réservoir principal 4 est fixé au châssis. Son fond 5 est incliné et il comporte une ouverture de décharge 6 dont la hauteur est réglable par un registre. Le fond 5 est prolongé par un plan incliné 7 formant herse.La bande transporteuse 8 porte,sur sa face externe, des dents 9 implantées de façon sensiblement perpendiculaire,et selon des lignes transversales. Ces dents délimitent les compartiments destinés à recevoir chacun une seule pomme de terre.

Trois rouleaux 10,11,12 font prendre à la bande 8 un cheminement en triangle comportant une partie verticale montante entre les rouleaux 10 et 11,une partie descendante jusqu'au rouleau 12 qui se trouve dans la zone de déchargement des pommes de terre sur le sol, et une partie de retour,qui est représentée horizontale sur la figure mais qui peut être montante si on place le rouleau 12 au point le plus bas pour limiter au maximum les chocs subis par les pommes de terre au contact du sol. Dans la zone de déchargement sont prévus des socs et lames pour ouvrir le sol en avant et le refermer en arrière,de façon classique. Le rouleau 10 est moteur,il est entraîné par la roue 2,grâce à des pignons 13,14 assurant la réduction convenable. Les dents 9 sont disposées sur la bande de façon à passer entre les dents de la herse 7 vers le bas de la partie verticale montante du trajet de la bande 8.Une seconde herse 15,verticale, est placée entre le corps de la bande 8 et l'extrémité des dents 9,à une distance réglable et qui correspond à la prise d'une seule pomme de terre dans chaque compartiment. Si les pommes de terre sont plus petites,on écarte la herse 15 du corps de la bande,et on l'en rapproche si les pommes de terre sont plus volumineuses.

Le dispositif auxiliaire comporte un réservoir auxiliaire 16,analogue au réservoir 4 mais plus petit,une herse inclinée 17 analogue à la herse 7,une herse verticale 18 analogue à la herse 15. Il comprend une bande transporteuse auxiliaire 19 de même structure que la bande 8,mais supportée par deux rouleaux superposés 20,21,si bien qu'elle décrit un trajet d'aller-retour vertical.A proximité du rouleau 20 se trouve le point de déchargement de la bande 19,qui se trouve au-dessus de la bande 8,non loin du rouleau 11. Il est à noter que ce point de déchargement peut également se trouver en un point quelconque du trajet descendant de la bande 8,entre les rouleaux 11 et 12 .Ce point de déchargement est équipé d'un déflecteur 22 qui dirige les pommes de terre de la bande 19 vers la bande 8.Le rouleau 20 est pourvu d'un pignon denté,à proximité duquel est placé un pignon mobile 23 entraîné en permanence par un pignon solidaire du rouleau 11,lui-même entraîné en rotation par la bande 8.L'entraînement du pignon 23 est assuré par une chaîne 24 munie d'un tendeur 25. Un vérin à air comprimé à double effet 26 peut déplacer le pignon mobile 23 et l'amener en prise avec le pignon du tambour 20.

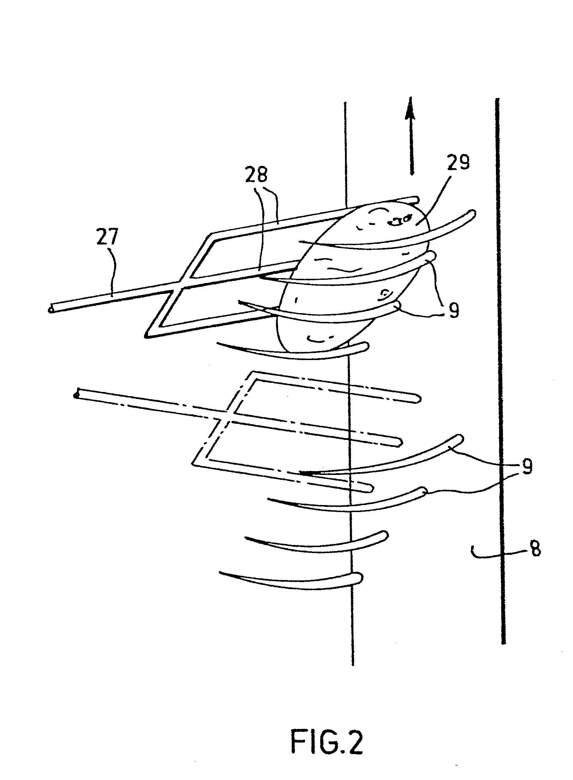

Le capteur est constitué d'un levier 27, monté à pivot sur un axe horizontal parallèle à celui des rouleaux 10 à 12, et qui porte des dents 28 dont la forme est calculée pour passer entre les dents 9 portées par la bande 8,et sans venir s'appuyer sur la herse 15. Le levier 27 est sollicité vers le bas par son poids ou par un ressort. Sur la figure 2,on a montré son fonctionnement. Sur cette figure,la herse 15 n'est pas représentée.

La bande 8 se déplaçant vers le haut, si une pomme de terre 29 se trouve portée par les dents 9,elle entraîne vers le haut le levier 27. S'il y a un manque,au contraire,les dents 28 passent entre les dents 9 et le levier 27 descend jusqu'à la position représentée en traits inter-

Dans cette position ,il actionne un contact électrique 30,lequel commande l'électrovanne 31 qui alimente le vérin 26.

Si le compartiment suivant de la bande 8 est encore vide,le vérin continue d'être actionné pour maintenir la bande 19 en mouvement et,par conséquent,les manques sont comblés par l'intervention du dispositif d'alimentation auxiliaire.

Si,au contraire les compartiments suivants de la bande 8 portent des pommes de terre,le levier 27 est relevé par ces dernières,et quand,par suite du mouvement ascendant,une pomme de terre cesse de soutenir le levier 27,celui-ci retombe,mais sa descente est arrêtée par la pomme de terre du compartiment suivant avant qu'il ait atteint la position où le vérin 26 est actionné. De ce fait, tant qu'il y a des pommes de terre dans les compartiments,le dispositif d'alimentation auxiliaire reste en position inactive.

Suivant une autre modalité intéressante, la bande 8 comporte deux séries de compartiments séparés par une ligne médiane et disposés en quinconce,le dispositif comprend deux capteurs indépendants et deux dispositifs d'alimentation auxiliaires,un pour chaque série de compartiments,le réservoir étant commun.

Malgré les précautions prises,il peut arriver que des germes,ou des brindilles,restent accrochés sur les dents 9 et soulèvent les dents 28 même lorsqu'il n'y a pas de pomme de terre. Cet inconvénient est évité en prévoyant sur le trajet de retour de la bande un dispositif de nettoyage 32,constitué par exemple d'une herse oblique,dont les dents passent entre les dents 9.

Dans une version simple, les dents portées par la bande 8 sont toutes de même longueur. Dans une version plus perfectionnée, qui est représentée sur la figure 1 mais non sur la figure 2, entre chaque ligne transversale de dents 9 de grande longueur est disposée une ligne de dents 33 plus courtes, et qui restent normalement en arrière de la herse 15, ou ne la dépassent que faiblement. Ces dents ne participent donc pas au transport des pommes de terre dans la phase ascendante du mouvement, entre les tambours 10 et 11. Elles sont sur le même alignement longitudinal que les dents 9, et ne risquent donc pas de venir en contact avec les dents du capteur 27. Lorsque la bande 8 change d'inclinaison en tournant autour du tambour 11, les pommes de terre, qui auraient sans cela glissé ou roulé d'une ligne de dents 9 à la précédente, sont arrêtées par les dents 33 et, faisant un trajet plus faible, risquent moins d'être détériorées. La distance entre une ligne de dents 33 et la ligne de dents 9 qui la suit peut être choisie en fonction de la taille des pommes de terre, alors que la distance entre les dents 9 consécutives est déterminée par des impératifs de débit et les caractéristiques du capteur.

D'autres modalités peuvent être prévues sans sortir du cadre de l'invention; par exemple, le capteur décrit peut être remplacé par un capteur photoélectrique, ou même piézoélectrique, un réservoir commun aux deux bandes peut être prévu, la bande auxiliaire 19 peut être remplacée par un dispositif d'un autre type, les herses, ou bien les lignes de dents 9, 33, peuvent être remplacées par des lames de caoutchouc ou autre matière pourvues d'échancrures convenablement disposées, etc.......

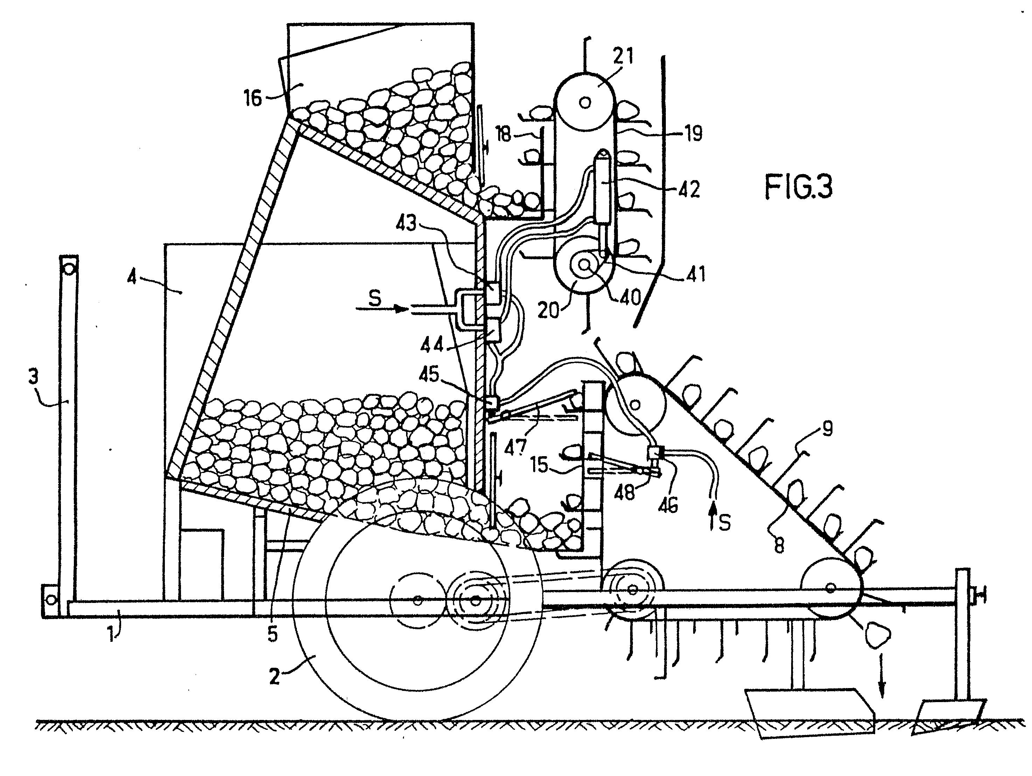

Selon un second mode de réalisation tel que représenté sur la figure 3, la machine selon l'invention comporte les mêmes éléments que la machine représentée sur la figure 1 à l'exception des moyens d'entraînement de la bande transporteuse auxiliaire 19 du dispositif correcteur , des moyens de commande de ces moyens d'entraînement et des moyens de détection assurant le déclenchement desdits moyens de commande . La machine automatique comporte donc comme précédemment un châssis 1 monté sur roue 2 et muni de moyens d'accrochage 3, un réservoir principal 4 étant fixé sur le châssis 1. Le fond 5 de ce réservoir principal 4 est incliné de manière à déverser des tubercules face à une herse verticale 15 le long de laquelle défilent vers le haut les griffes 9 portées par le brin sensiblement vertical de chargement de la bande transporteuse principale 8.

Le dispositif correcteur/qui est situé comme précédemment à la partie supérieure de la machine comporte un réservoir auxiliaire 16 , une herse verticale 18 ,une bande transporteuse auxiliaire 19 du même type que la bande principale 8 mais supportée par deux rouleaux superposés 20 et 21 de telle sorte qu'elles forment deux brins parallèles sensiblement verticaux, le brin de chargement défilant devant la herse verticale 18 de manière à prélever des tubercules de remplacement pour combler les vides de la bande principale 8. Le rouleau inférieur 20 est monté sur un mécanisme de roue libre 40 entraîné en rotation cran par cran par l'intermédiaire d'un bras de levier 41 à l'extrémité duquel est fixée la tige d'un vérin 42 d'entraînement de la bande 19. Le vérin 42 est un vérin à double effet pneumatique ou hydraulique dont les deux chambres opposées du cylindre sont reliées respectivement à deux distributeurs 43,44 alimentés par une source S de fluide comprimé tel que de l'air ou un fluide hydraulique.

Les moyens de commande du vérin 42 sont eux-mêmes commandés par l'intermédiaire d'un circuit pneumatique ou hydraulique comportant deux valves d'interruption de circuit 45 et 46 et deux détecteurs $4^7$ et 48 constitués par des leviers pivotants dont une extrémité est destinée à actionner lesdites valves 45 et 46 et dont l'autre extrémité/située sur la trajectoire des griffes 9 de la bande transporteuse principale 8 de manière à détecter soit la présence d'un tubercule soit le passage d'une de ces griffes . Les deux valves d'interruption 45 et 46 sont disposées en série et la valve 45 est reliée à la fois au distributeur 43 et au distributeur 44. Le levier de détection $4^7$ est du même type que le levier $2^7$ du mode de réalisation précédent c'est-à-dire qu'il comporte à son extrémité voisine de la herse 15 une fourche dont les dents sont conformées de manière à passer entre les griffes 9 de la bande transporteuse principale 8, l'autre extrémité du levier $4^7$ agissant sur la valve 45 pour commander son ouverture ou sa fermeture. Quant au levier 48, il détecte par l'intermédiaire d'un doigt le passage des griffes 9 et il agit à son autre extrémité sur la valve 46 dont il commande l'ouverture ou la fermeture.

On notera que ce second mode de réalisation comporte également une bande transporteuse principale 8 dont le brin de déchargement est

15

incliné obliquement en direction du sol tel que les tubercules transportés reposent par gravité dans le fond du compartiment sans frotter sur aucun carter .

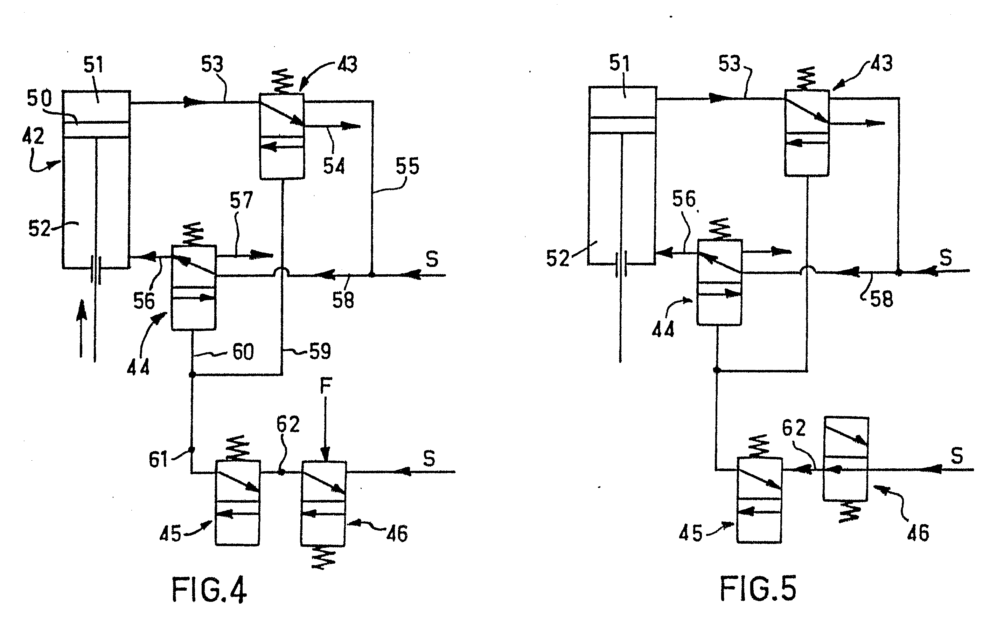

L'entraînement du dispositif correcteur est assuré par le mécanisme de roue libre actionné par le vérin 42 alimenté par le circuit représenté schématiquement sur les figures 4 à 7.

Le vérin d'actionnement 42 est un vérin à double effet dont le piston 50 sépare une chambre supérieure 51 d'une chambre inférieure 52 . La chambre supérieure 51 est reliée à la source S de fluide comprimé par les conduits 53 et 55 entre lesquels est interposé le distributeur 43 qui, lorsqu'il n'est pas excité,met le conduit 53 en communication avec le conduit 54 d'échappement.La chambre inférieure 52 du vérin 42 est reliée à la source de fluide comprimé S par l'intermédiaire des conduits 56 et 58 entre lesquels est interposé le distributeur 44 qui,lorsqu'il n'est pas excité, assure la communication entre ces deux conduits, c'est-à-dire permet l'admission dans la chambre 52 du fluide comprimé . La mise à admission ou à échappement des deux distributeurs 43 et 44 est assurée par les deux valves 45 et 46 interposées en série entre le distributeur et la source S de fluide comprimé . La valve 46 est une valve normalement ouverte,c'est-à-dire que lorsqu'elle n'est pas excitée elle laisse passer le fluide , ladite valve étant reliée en série par un conduit 62 à la valve 45 qui , elle, est une valve normalement fermée,c'est-à-dire que sans excitation elle coupe le circuit,ladite valve étant reliée par un conduit 61 et les conduits 59 et 60 respectivement aux deux distributeurs 43 et 44.

La commande du fonctionnement du vérin 42 s'effectue de la façon suivante:

En cours de fonctionnement normal de la bande transporteuse principale 8, chacun de ses compartiments comporte un tubercule sur lequel l'extrémité du levier palpeur 47 vient reposer à tour de rôle et se trouve ainsi relevée. Le levier 47 n'agit alors pas sur sa valve associée 45 qui reste en position de repos c'est-à-dire en position fermée . Entre deux griffes, le levier palpeur 48 n'est pas sollicité et exerce par conséquent sur sa valve associée 46 un effort F qui ferme celle-ci. Nous nous trouvons alors dans le cas du circuit de la figure 4 pour lequel aucun des distributeurs 43 et 44 n'est excité si bien que le distributeur 43 qui est en position d'échappement et fait communiquer la chambre 51 du cylindre 42 avec l'échappement 54 tandis que le distributeur 44 est en position d'admission et assure la communication entre la chambre inférieure 52 et la source S de fluide comprimé . Dans cet état, la chambre 52 est sous pression et le piston 50 du vérin 42 est en position haute.

Au passage d'une griffe 9 , le levier palpeur 48 est soulevé, ce qui supprime son action sur la valve 46 qui revient à sa position de repos normalement ouverte .Le fluide comprimé peut pénétrer dans le conduit 62 et atteindre la seconde valve 45 qui, elle, est toujours en position fermée (voir figure 5).

Comme précédemment, aucun des deux distributeurs 43 et 44 n'est excité et l'état précédent de ces distributeurs et du vérin 42 reste inchangé .

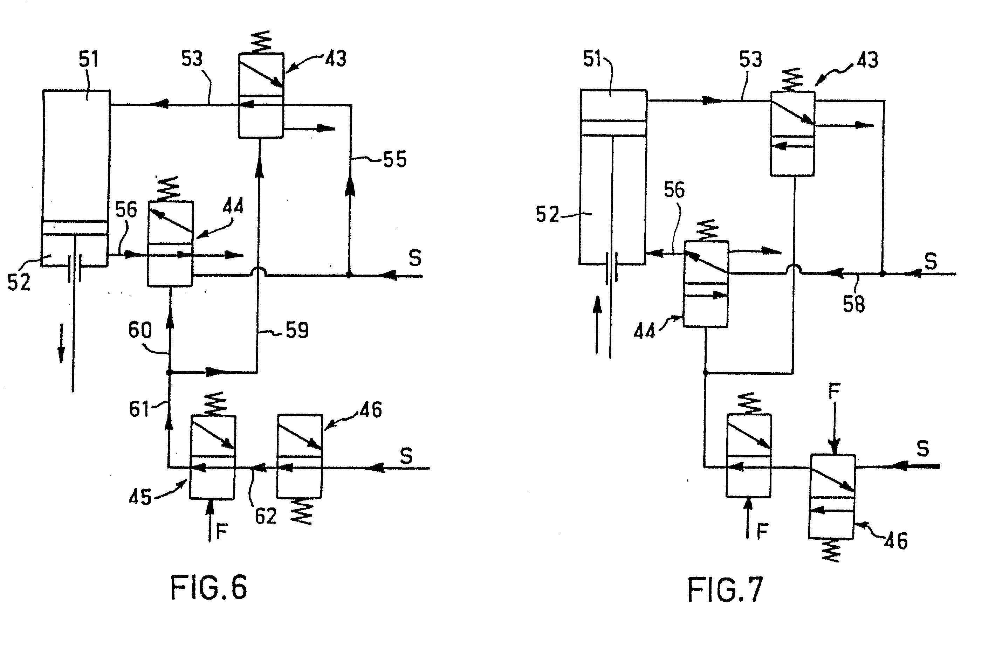

Le levier palpeur 48 étant toujours soulevé par le passage d'une griffe 9 de la bande transporteuse 8, si le compartiment correspondant est vide , le levier palpeur 4⁷ retombe . Dans cet état (voir figure 6), la valve 46 n'est pas excitée et occupe sa position de repos, c'est-à-dire sa position ouverte tandis que la valve 45 est soumis à un effort de la part du levier 4⁷ et elle occupe une position ouverte. Les deux distributeurs 43 et 44 sont excités par le fluide comprimé qui les atteint à travers les conduits 62,61,59 et 60 et la chambre 51 du vérin 42 est mise en communication avec la source de fluide comprimé S tandis que la chambre inférieure 52 du vérin est mise à l'échappement . Le piston 50 du vérin 42 est repoussé vers le bas et agit sur le levier 41 du mécanisme de roue libre 40 en faisant progresser celui-ci d'un cran, ce qui fait déplacer la bande auxiliaire 19 d'un pas.

Lorsque la griffe 9 de la bande principale 8 s'est déplacée vers le haut et a permis au levier 48 d'échapper et de revenir en position de repos, la valve 46 est à nouveau excitée sous l'effet d'une force F dudit levier 48 (voir figure 7) ce qui coupe le circuit de contrôle des deux distributeurs 43 et 44 qui reviennent en position de repos. Le distributeur 43 met à nouveau la chambre supérieure 51 du vérin 42 en position d'échappement tandis que le distributeur 44 met à nouveau la chambre inférieure 52 du vérin à l'admission. Le piston remonte alors et revient à sa position initiale en entraînant avec lui le levier 41 du mécanisme de roue libre 40.

Le dispositif est prêt pour une nouvelle compensation d'un manque de la bande principale 8.

Le fluide comprimé mentionné ci-dessus peut être aussi bien de l'air comprimé qu'un fluide hydraulique.

Selon une variante de ce second mode de réalisation comportant deux organes de détection agissant complémentairement, l'entraînement de la bande auxiliaire du dispositif correcteur est assurée par un moteur électrique pas-à-pas dont l'axe est solidaire du tambour 20 de ladite bande. Le moteur électrique pas-à-pas est relié en permanence à une source électrique et deux interrupteurs sont placés en série dans le circuit en remplacement des deux vannes précédentes 45 et 46. L'interrupteur électrique remplaçant la vanne 46 est actionné par le levier palpeur 48 qui détecte le passage d'une griffe de la bande transporteuse 8, ledit interrupteur fermant normalement le circuit en position de repos, c'est-à-dire qu'il permet le passage de courant. Quant à l'interrupteur électrique qui remplace la valve précédente 45, il est actionné par le levier palpeur 4[7] qui détecte la présence d'un tubercule dans un compartiment de la chaîne transporteuse 8, ledit interrupteur étant normalement, au repos, en position ouverte, c'est-à-dire qu'il coupe le circuit et ne laisse pas passer le courant électrique.

Le fonctionnement est comparable à celui précédemment décrit c'est-à-dire que, lorsqu'un tubercule se trouve dans le compartiment testé, le levier 4[7] est soulevé et l'interrupteur 45 est ouvert. Quelle que soit la position du détecteur 48, le courant ne passe pas dans le circuit et le moteur pas-à-pas reste immobile .

Par contre, lorsqu'un manque apparaît, le levier 4[7] revient en position de repos et agit sur l'interrupteur associé de manière à le fermer. Au passage d'une griffe 9, le levier palpeur 48 est soulevé et l'interrupteur associé prend sa position de repos, c'est-à-dire qu'il ferme le circuit et permet le passage du courant jusqu'au moteur pas-à-pas qui tourne d'un pas et fait progresser d'un cran la bande auxiliaire 19 du dispositif correcteur .

Grâce à l'utilisation d'une source auxiliaire d'énergie il est possible d'alléger au maximum les organes de détection qui ne risquent plus ainsi d'endommager les germes des tubercules transportés par la bande principale 8. A la limite il est même possible d'utiliser des systèmes optiques de détection qui n'exercent plus aucune pression sur les objets transportés. La quasi disparition de tout effort sur les tubercules transportés ne réduit pas pour autant l'énergie distribuée aux organes d'entraînement de la bande auxiliaire du dispositif correcteur du fait que ladite énergie est délivrée par une source dont la puissance est indépendante des efforts développés au niveau des dispositifs de détection.

Bien entendu, la portée de l'invention n'est pas limitée aux seuls modes de réalisation dé-crits ci-dessus à titre d'exemple non limitatifs mais elle couvre également toute variante qui ne différerait que par des détails.

## REVENDICATIONS

1. Machine pour déposer sur le sol des objets fragiles , notamment des tubercules germés, comprenant un châssis (1) , un réservoir (4) d'objets à déposer délivrant ceux-ci par gravité, une bande transporteuse continue principale (8) pourvue de barrières transversales (9) délimitant des compartiments susceptibles de recevoir chacun un seul objet, des moyens d'entraînement de ladite bande transporteuse , un dispositif correcteur comportant une bande transporteuse auxiliaire (19) destinée à délivrer les objets dans les compartiments restés vides de la bande principale (8) et des moyens d'entraînement intermittent (23,24 et 40, 42) de ladite bande auxiliaire (19) , un dispositif de détection (2⁷, 4⁷) des manques dans les compartiments de la bande transporteuse principale (8) , et des moyens de commande (26,31 et 43,44) du fonctionnement des moyens d'entraînement intermittent de la bande auxiliaire, la bande transporteuse principale (8) comportant un brin de chargement sensiblement vertical défilant devant la sortie (6) du réservoir d'objets et un brin de déchargement descendant au voisinage du sol , tandis-que la bande auxiliaire (19) du dispositif correcteur est située à l'aplomb de ladite bande principale de manière à pouvoir déverser les objets de compensation sur celle-ci , caractérisée en ce que les moyens de commande (26, 31 et 43 , 44) sont actionnés par une source d'énergie auxiliaire indépendante des moyens d'entrainement de la bande transporteuse principale, l'activation de ces moyens de commande étant effectuée par le système de détection (2⁷,30 et 45,46 ,4⁷ ,et 48) et en ce que le brin de déchargement de la bande transporteuse principale 8 est incliné obliquement en direction du sol de telle sorte que, le long dudit brin, les tubercules reposent par gravité dans le fond de leur compartiment.

2. Machine selon la revendication 1 caractérisée en ce que les moyens d'entraînement de la bande transporteuse auxiliaire (19) du dispositif correcteur sont essentiellement constitués par un dispositif d'embrayage (23,24.)

3. Machine selon la revendication 1 caractérisée en ce que les moyens d'entraînement de la bande transporteuse auxiliaire (19) du dispositif correcteur sont essentiellement constitués par un mécanisme de roue libre (40) associé à un organe moteur (42.)

4. Machine selon la revendication 2 caractérisée en ce que les moyens de commande des moyens d'entraînement (23,24) de la bande transporteuse auxiliaire (19) sont essentiellement constitués par un vérin (26) qui commande l'accouplement de la bande auxiliaire à la bande transporteuse principale et par une électrovanne (31) de commande dudit vérin commandée elle-même par un contact électrique (30) actionné par un palpeur (27) du système de détection.

5. Machine selon la revendication 3 caractérisée en ce que l'organe moteur du mécanisme de roue libre (40) est un vérin (42), en ce que les moyens de commande dudit vérin sont essentiellement constitués par deux distributeurs (43 et 44) assurant la communication entre ledit vérin et une source de fluide comprimé et par un circuit de contrôle de ce distributeur relié à ladite source de fluide comprimé et incorporant deux valves (45 et 46) de coupure du circuit, et en ce que le système de détection comporte un premier détecteur servant à détecter le passage d'un compartiment de la bande transporteuse principale et un second détecteur servant à détecter la présence des objets dans un compartiment, chaque détecteur actionnant une valve de coupure du circuit de contrôle des distributeurs .

6. Machine selon la revendication 3 caractérisée en ce que l'organe moteur entraînant le mécanisme de roue libre du dispositif correcteur est un moteur électrique pas-à-pas relié en permanence à une source d'énergie électrique qui assure son fonctionnement et en ce que les moyens de commande du moteur sont essentiellement constitués par deux contacteurs ou interrupteurs actionnés par deux détecteurs du système de détection, l'un des détecteurs enregistrant la présence ou l'absence d'un objet dans un compartiment de la bande transporteuse principale 8 tandis que le second détecteur enregistre le passage de ces compartiments.

FIG.1

9014622

FIG.2

FIG.3

3/5

0014622

FIG.4

FIG.5

9014622

FIG.6

FIG.7

9014622

0014622

**Office européen**
**des brevets**

**RAPPORT DE RECHERCHE EUROPEENNE**

Numéro de la demande

EP 80 40 0104

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernee | |
| D | <u>FR - A - 988 160</u> (GANCEDO)<br><br>* Page 1, colonne de gauche, dernier paragraphe et colonne de droite, figures 1-6 *<br><br>-- | 1 | A 01 C 9/02 |
| D | <u>FR - E - 28 669</u> (LOISEAU)<br><br>* Page 1, lignes 50-54; page 2, lignes 1-88; figures 1,2 *<br><br>-- | 1 | |
| | <u>FR - A - 1 134 300</u> (HACHE)<br><br>* Totalité du brevet *<br><br>-- | 1 | **DOMAINES TECHNIQUES RECHERCHES (Int. Cl.** |
| | <u>DE - A - 1 582 048</u> (CRAMER)<br><br>* Page 3, et page 4; figures 1,2 *<br><br>-- | 1,2,4 | A 01 C 9 |
| | <u>FR - A - 2 356 349</u> (JEANTIL)<br><br>* Page 2, dernier paragraphe; page 3, paragraphes 1,2; figures 1,2 *<br><br>-- | 1,2,4 | |
| | <u>DE - B - 2 636 238</u> (CRAMER)<br><br>* Colonne 3, lines 29-68; colonne 4; colonne 5; colonne 6, figures 1,2,3 *<br><br>---- | 1,2 | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base de l'invention<br>E: demande faisant interference<br>D: document cite dans la demande<br>L: document cité pour d'autres raisons<br><br>&: membre de la même famille, document correspondant |

| Le présent rapport de recherche a été établi pour toutes les revendications | | |
|---|---|---|
| Lieu de la recherche<br>La Haye | Date d'achevement de la recherche<br>24-04-1980 | Examinateur<br>VERMANDER |

OEB Form 1503.1   06.78